# EUROPÄISCHE PATENTANMELDUNG

(11) **EP 1 801 574 A2**
(43) Veröffentlichungstag der Anmeldung: **27.06.2007**
(21) Anmeldenummer: 06026283.9
(22) Anmeldetag: 19.12.2006
(51) Int. Cl.: G01N 27/90

(54) **Rotierkopf für zerstörungsfreie Prüfungen**

(30) Priorität: 20.12.2005 DE 102005061273
(71) Anmelder: Prüftechnik Dieter Busch AG, 85737 Ismaning (DE)
(72) Erfinder: Zimmermann, Bernd, 79241 Ihringen (DE)

(57) **Zusammenfassung**

Ein Rotierkopf zur Verwendung in einem Gerät zur zerstörungsfreien Prüfung von metallischem Prüfgut weist neben Sondenträgern, Streufluß- oder Wirbelstromsensensoren einen Koppelring (180) sowie elastische Koppelelemente auf. Auf diese Weise wird eine tandemartige, annähernd zwangsweise Verkopplung von Schwenkbewegungen der Sondenträger bewirkt.

## Beschreibung

Die vorliegende Erfindung betrifft einen Rotierkopf zur Verwendung in einem Gerät zur zerstörungsfreien Prüfung von Prüfgut oder Prüflingen, insbesondere Prüfgut in Form von Metallgegenständen, z.B. von stabförmigem Walzmaterial.

Eine ähnliche Vorrichtung ist bekannt aus der EP 0452433. Auf diese Veröffentlichung wird in vollem Umfang Bezug genommen, um Längen zu vermeiden.

Auch bei der vorliegenden Erfindung geht es um einen Rotierkopf zur Prüfung von z.B. blankem Rundmaterial aus Stahl oder Nichteisenmetallen usw.

Der vorliegenden Erfindung liegt ebenfalls die Aufgabe zugrunde, den Rotierkopf der eingangs genannten Art so zu verbessern, dass ein kostengünstigerer Betrieb ermöglicht und eine verbesserte und universellere Anwendungsmöglichkeit geschaffen wird. Außerdem soll sein Einsatz nicht nur für Streuflußprüfungen, sondern auch für Wirbelstromprüfungen möglich sein.

Diese Aufgabe wird gelöst durch einen Rotierkopf, der die Charakteristika des Anspruchs 1 aufweist.

Die Erfindung wird im Folgenden anhand der Zeichnungen erklärt, wobei Fig. 1 den Stand der Technik aus der obengenannten EP 0452443 wiedergibt. Man erkennt die gegenüber einem Gehäuse 10 drehbar angebrachte Rotierscheibe 50 samt dort angebrachten Sondenhebeln 52, welche um Bolzen 54 o.dgl. verschwenkt werden können. Die Sondenhebel tragen als nutzsignalgebende Sensoren Wirbelstromgeber 60, die hier z.B. an Sondenbalken 58 angebracht sind.

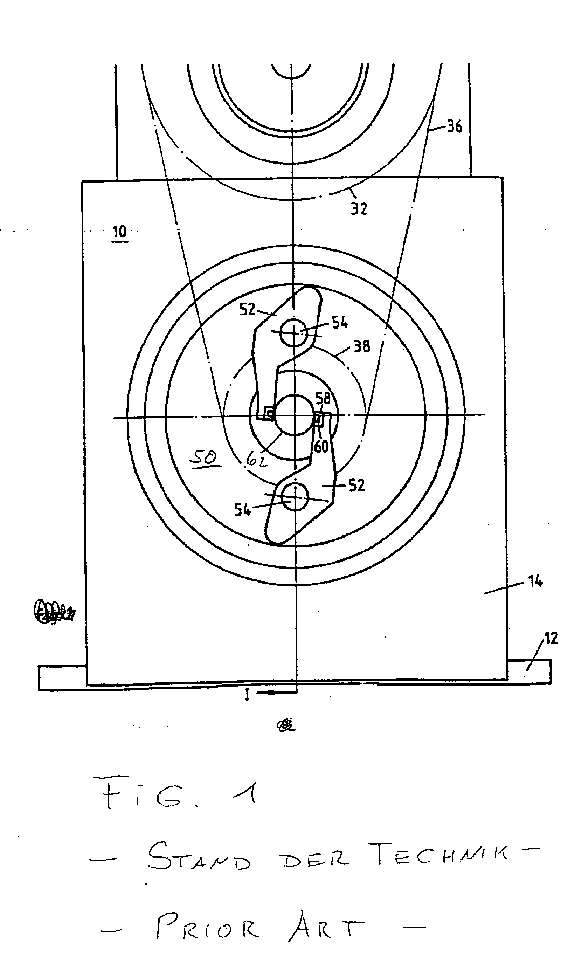

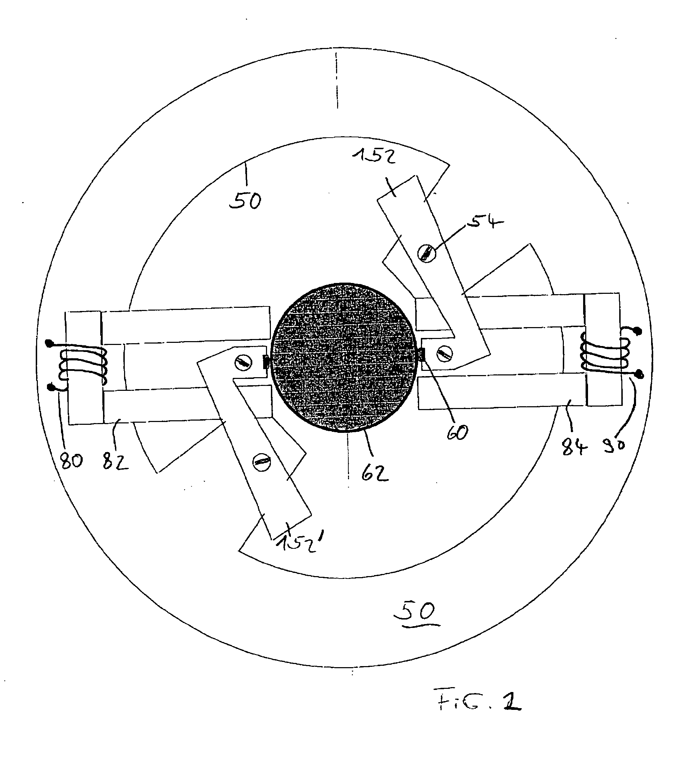

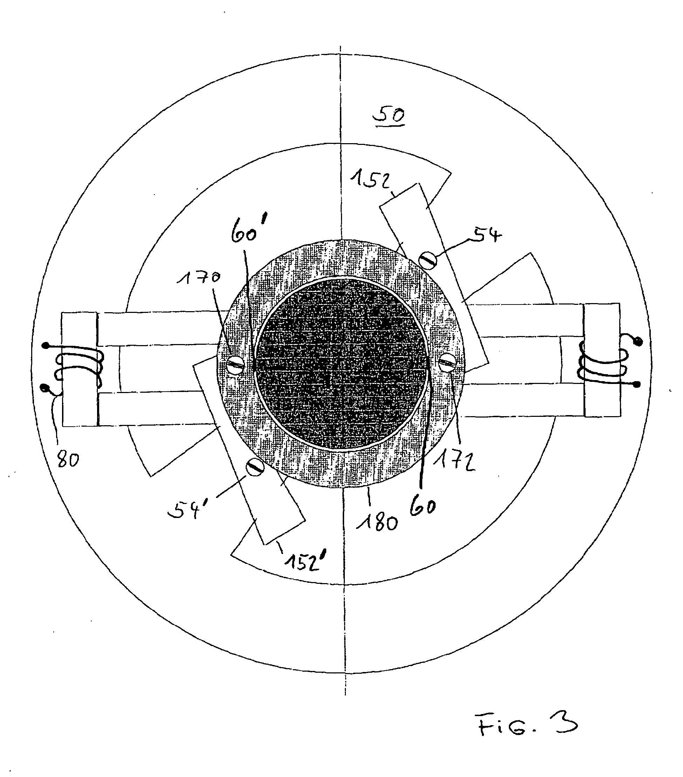

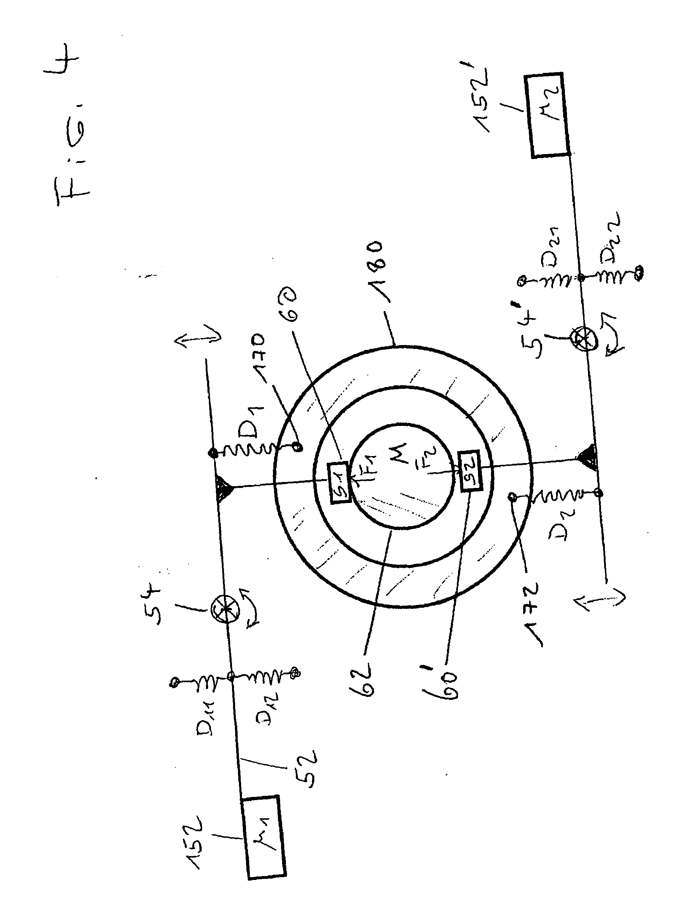

Die gegenüber diesem Stand der Technik in annähernder Weise übernommenen Konstruktionselemente sind in Fig. 2 dargestellt, wobei die Joche 82, 84 samt Erregerspulen 80, 90 dafür sorgen, daß der Prüfling 62 gemäß eines an sich bekannten Streufluß-Testverfahrens magnetisiert wird, so daß die Sensoren 60 einen durch einen Materialdefekt des Prüflings bedingten Streufluß oder eine Streuflußvariation detektieren können. Insofern unterscheidet sich die Erfindung wesentlich von vorherig bekanntem Stand der Technik, da anstelle der Streufluß-Sensorik mit nur wenigen Modifikationen der erfindungsgemäßen Vorrichtung auch eine Wirbelstrom-Sensorik vorgesehen werden kann. Dies beruht darauf, dass es gemäß der Erfindung möglich ist, die Wirbelstrom-Sensoren wesentlich näher an das Prüfgut zu bringen, als dies vorher möglich war. Der Grund hierfür ist, daß die Anpreßkräfte der Sensoren an das Prüfgut wesentlich geringer gehalten werden können, als dies bislang vorgesehen wurde bzw. vorgesehen werden konnte. Aus diesem Grunde kann also auch eine Wirbelstrom-Sensorik vorgesehen werden, welche mit einer eher geringfügigen Kontaktkraft auf den Prüfling funktioniert (anstelle einer vormals erforderlichen berührungslosen Sensorik). Infolgedessen können höhere Signalfrequenzen detektiert werden, oder äquivalent, Defekte mit kleineren Dimensionen am Prüfling, als dies vorher möglich war.

Die eigentliche erfindungsgemäße Innovation wird aus Fig. 3 und Fig. 4 ersichtlich.

Wie aus Fig. 3 zu ersehen, sind die um die Lagerelemente (e.g. Bolzen) 54, 54' schwenkbaren Sondenhebel 152, 152' nämlich in ihrer Bewegung über einen Koppelring 180 verkoppelt, allerdings nicht in direktester Weise, sondern unter Zwischenschaltung elastischer Elemente (in Fig. 3 nicht gezeigt). Hierzu sind Ankoppelelemente 170, 172 vorgesehen, welche die gewünschte elastische Ankopplung der Sondenhebel an den Koppelring bewirken. Auf diese Weise sorgt z.B. eine durch Exzentrizität des Prüflings 62 und den kontaktierenden Sensor 60' verursachte Schwenkbewegung des Sondenhebels 152' nach links dafür, daß der Sensor 60 auf dem Sensorhebel 152 dieser Bewegung im gewünschten Sinne folgt, ohne daß es einer Anpressfeder, eines elektromagnetischen Stellgliedes oder dergleichen bedarf. Das gleiche gilt für eine Schwenkbewegung des Sondenhebels 152 nach rechts, welcher dann eine Zugbewegung auf Sondenhebel 152' samt zugehörigem Sensor 60' ausübt, sodaß beide der gezeigten Sensoren mit relativ leichter Anpreßkraft auf dem Prüfling liegen bleiben, zumindest sich stets in unmittelbarer Nähe des Prüflings befinden. Es versteht sich, daß der Innendurchmesser des Koppelringes 180 größer sein muß, als der Außendurchmesser des Prüflings 62. Der Koppelring 180 wird bevorzugt aus einem leichten, stabilen Werkstoff wie Titan oder Aluminium gefertigt, ggf. auch aus einem Kohlenstofffaser-Verbundwerkstoff.

Die in Fig. 3 gezeigten Verhältnisse werden in stark schematisierter Form in Fig. 4. dargestellt. Eine durch exzentrische Lage des Prüflings 62 und resultierender Kontaktkraft F1 bedingte Auslenkung des Sensors S1 (Bezugsziffer 60) wird über ein elastisch wirkendes Konstruktionselement D1, welches z.B. in Form eines Gummipuffers implementiert ist, in fast direkter Weise auf den Koppelring 180 übertragen. Dieser wirkt seinerseits über ein zweites, ebenfalls elastisch wirkendes Konstruktionselement D2 auf den Sensorhebel 152', dessen Trägheitsmoment mit M2 bezeichnet sein möge. Auf diese Weise kann der Sensorhebel 152' samt zugehörigem Sensor S2 (Bezugsziffer 60') ohne Federkraft der zurückweichenden Bewegung des Prüflings "M" (Bezugsziffer 62) folgen. - Vergleichbares gilt, falls es zu einer Kontaktierung des Sensors S2 kommt und eine Kontaktkraft F2 den Sensor S2 verlagert, so daß mittels der Elastizitäten D1 und D2 und dem Koppelring 180 auch eine subsequente Verlagerung des Sensors S1 (60) erfolgt. - Darüberhinaus gestatten die Elastizitäten D1 und D2 eine Anpassung der Lage der Sensoren S1 und S2 an den Prüfling, falls dieser Abweichungen von seinem Nominaldurchmesser aufweisen sollte.

Gemäß der Erfindung ist es vorteilhaft, zusätzliche, eventuell selektiv wirkende elastische Konstruktionselemente D11, D12, D21 und D22 vorzusehen, welche dafür sorgen, daß bei Abwesenheit eines Prüflings 62 eine Nullstellung (Soll-Winkellage) der Sensoren S1 und S2 samt zugehörigen Koppelring 180 erfolgt.

Insgesamt kann mit den erfindungsgemäßen Innovationen nunmehr mit großem Vorteil erreicht werden, daß auch die Enden eines Prüflings sofort bei Einlauf in den Rotierkopf sensiert d.h. getestet werden können, was mit bisher bekannten Methoden nicht möglich war. Außerdem kann, ebenfalls mit großem Vorteil, eine bislang bei Wirbelstromsensoren erforderliche elektronisch wirkende Abstandskompensationsvorrichtung entfallen.

Die genannten elastischen Konstruktionselemente können aus Metall hergestellt sein, oder einem hochwertigen kautschukartigem Material, zum Beispiel Fluoro-Silikonkautschuk.

## Patentansprüche

1. Rotierkopf zum Abtasten der Oberfläche von langgestrecktem Prüfgut, mit
- mindestens zwei auf Sondenträgern (152, 152') befestigten Streuflußsensoren (60, 60') oder Wirbelstromsensoren zur kontaktierenden Abtastung eines Prüflings (62)
- einem Koppelring (180)
- elastisch wirkenden Konstruktionselementen D1, D2 zur tandemartigen, annähernd zwangsweisenVerkopplung der Schwenkbewegungen der genannten Sondenträger bei der Auslenkung der genannten Streufluß- oder Wirbelstromsensoren und zugeordneten Sondenträger aufgrund exzentrischer Lageveränderungen des Prüflings (62).

2. Rotierkopf nach Anspruch 1, mit elastisch wirkenden Konstruktionselementen (D11, D12, D21, D22) zur Bereitstellung einer Soll-Lage (Soll-Winkelstellung) der genannten Sensoren bei Abwesenheit eines Prüflings (62).
